# EUROPÄISCHE PATENTANMELDUNG

(11) **EP 0 943 413 A2**
(43) Veröffentlichungstag der Anmeldung: **22.09.1999**
(21) Anmeldenummer: 99103023.0
(22) Anmeldetag: 16.02.1999
(51) Int. Cl.: B29C 47/08

(54) **Verfahren und Vorrichtung zum Verhindern einer Berührung zwischen einer Schlauchfolienblase und einem diese abtastenden Sensor**

(30) Priorität: 17.03.1998 DE 19811595
(71) Anmelder: Windmöller & Hölscher, D-49525 Lengerich (DE)
(72) Erfinder: Avermeyer, Ansgar, 49124 Georgsmarienhütte (DE)

(57) **Zusammenfassung**

In einer Blasfolienanlage zur Herstellung von Schlauchfolien wird der zu einer Schlauchfolienblase aufgeblasene extrudierte Kunststoffschlauch von einem Sensor berührungslos abgetastet, der die Dicke oder andere Eigenschaften der Schlauchfolie erfaßt. Um zu verhindern, daß bei einer plötzlichen Durchmesseränderung der Schlauchfolienblase oder bei deren Pumpen oder Ausbauchen die Schlauchfolienblase mit dem Sensor in Berührung kommt, wird die Schlauchfolienblase im Bereich der Frostlinie berührungslos abgetastet und der Sensor in radialer Richtung zurückgefahren, wenn die Abtastung eine plötzliche Durchmesservergrößerung oder Ausbauchung der Schlauchfolienblase ergibt.

## Beschreibung

Die Erfindung betrifft ein Verfahren zum Verhindern einer Berührung zwischen einem zu einer Schlauchfolienblase aufgeblasenen extrudierten Kunststoffschlauch bei der Herstellung von Schlauchfolien und einem diese in ihrem oberen Bereich berührungslos abtastenden Sensor sowie eine Vorrichtung zur Durchführung dieses Verfahrens.

Kunststoffolien werden im Blasverfahren dadurch hergestellt, daß aus einem Folienblaskopf ein schmelzflüssiger Kunststoffschlauch extrudiert wird, der zwischen diesem und einer aus Abzugswalzen bestehenden Abzugseinrichtung, denen Flachlegeplatten vorgeschaltet sind, zu einer den extrudierten Schlauch ausreckenden Schlauchfolienblase aufgeblasen wird. Dabei wird der Innendruck der Schlauchfolienblase durch Einblasen und Abziehen kühlender Luft erzeugt, wobei der Luftaustausch durch den Folienblaskopf axial durchsetzende Kühlluftzuführungs- und Luftabführungsrohre erfolgt. Der zu einer Schlauchfolienblase aufgeblasene extrudierte Kunststoffschlauch wird in seinem oberen Bereich dicht unterhalb der Flachlegeplatten in einem Bereich, in dem er noch einen nahezu kreisrunden Querschnitt aufweist, durch mindestens einen ortsfest am Gestell angeordneten oder einen Sensor abgetastet, der auf einem Karussell angeordnet ist, auf dem er konzentrisch um die Schlauchfolienblase herumfährt. Der Sensor mißt die Dicke der Schlauchfolienblase über ihren Umfang und/oder die Eigenschaften des Kunststoffschlauchs wie beispielsweise Glanz, in der Folie verteilte Stippen oder andere Material- und/oder Oberflächeneigenschaften. Die Art und Anordnung dieser berührungslos die Schlauchfolienblase abtastenden Sensoren sind bekannt und brauchen daher hier nicht näher beschrieben zu werden.

Ein besonderes Problem dieser Sensoren ergibt sich jedoch daraus, daß sie dicht an die Wandung der Schlauchfolienblase angestellt werden, um möglichst gute Meßergebnisse zu erzielen. Ergeben sich in der Schlauchfolienblase plötzliche Schwankungen im Durchmesser, die in Form eines sog. Pumpens oder Ausbauchens durch Bildung von Beulen insbesondere dann auftreten können, wenn die Blasfolienanlage im oberen Bereich ihrer Leistungsgrenze gefahren wird und/oder sich das Mischungsverhältnis des angesetzten Kunststoffgranulats ändert oder ein Chargenwechsel erfolgt, besteht die Gefahr, daß die Schlauchfolienblase den Sensor berührt, so daß die Schlauchfolie eingerissen und möglicherweise auch der Sensor zerstört wird. Diese Gefahr ist insbesondere dann groß, wenn die Oberfläche der Schlauchfolienblase klebrig ist. Wird die Schlauchfolienblase eingerissen, wird es in der Regel erforderlich, die Anlage neu anzufahren, was wegen des Einführens des extrudierten Kunststoffschlauchs in die Abzugseinrichtung und des erneuten Einstellens des Aufblasverhältnisses mit einem erheblichen Aufwand und einem Produktionsverlust verbunden ist.

Aufgabe der Erfindung ist es daher, ein Verfahren schaffen, das es verhindert, daß die Schlauchfolienblase mit dem diese berührungslos abtastenden Sensor oder Meßgerät in Berührung kommt.

Erfindungsgemäß wird diese Aufgabe dadurch gelöst, daß die Schlauchfolienblase im Bereich der Frostlinie berührungslos abgetastet und der Sensor zurückgefahren wird, wenn die Abtastung eine plötzliche Vergrößerung des Durchmessers oder Ausbauchung der Schlauchfolienblase ergibt.

Im Bereich der Frostlinie verfestigt sich die Schlauchfolienblase, so daß oberhalb bzw. stromabwärts von dieser Durchmesseränderungen nicht mehr zu erwarten sind. Da die Schlauchfolie von dem Bereich der Frostlinie bis zu der oder den die Schlauchfolienblase in deren oberen Bereich abtastenden Sensoren noch eine gewisse Laufstrecke zurückzulegen hat, kann der die Schlauchfolienblase abtastende Sensor noch so rechtzeitig zurückgefahren werden, daß es bei einem Pumpen, einer plötzlichen Durchmesservergrößerung oder dem Auftreten von Ausbauchungen oder Beulen nicht zu einer Berührung zwischen dem Sensor und der Schlauchfolienblase kommt. Damit kann nach dem erfindungsgemäßen Verfahren mit großer Sicherheit verhindert werden, daß es zu einer Berührung zwischen der Schlauchfolienblase und dem Sensor und einem damit verbundenen Reißen oder Einreißen der Schlauchfolienblase und einer Beschädigung kommt.

Eine Vorrichtung zur Durchführung des erfindungsgemäßen Verfahrens mit mindestens einem im oberen Bereich der Schlauchfolienblase ortsfest oder rotierend angeordneten Sensor, der berührungslos die Dicke der Schlauchfolie oder andere Eigenschaften mißt und der durch einen Antrieb in radialer Richtung verfahrbar ist, zeichnet sich erfindungsgemäß dadurch aus, daß im Bereich der Frostlinie über den Umfang der Schlauchfolienblase verteilt deren Durchmesser berührungslos abtastende Fühler angeordnet sind, die ihre Signale einer Steuereinrichtung zuführen, die den Sensor über ihren Antrieb nach außen verfährt, wenn der Fühler eine von einem Toleranzmaß abweichende Durchmesserzunahme oder Ausbauchung erfaßt.

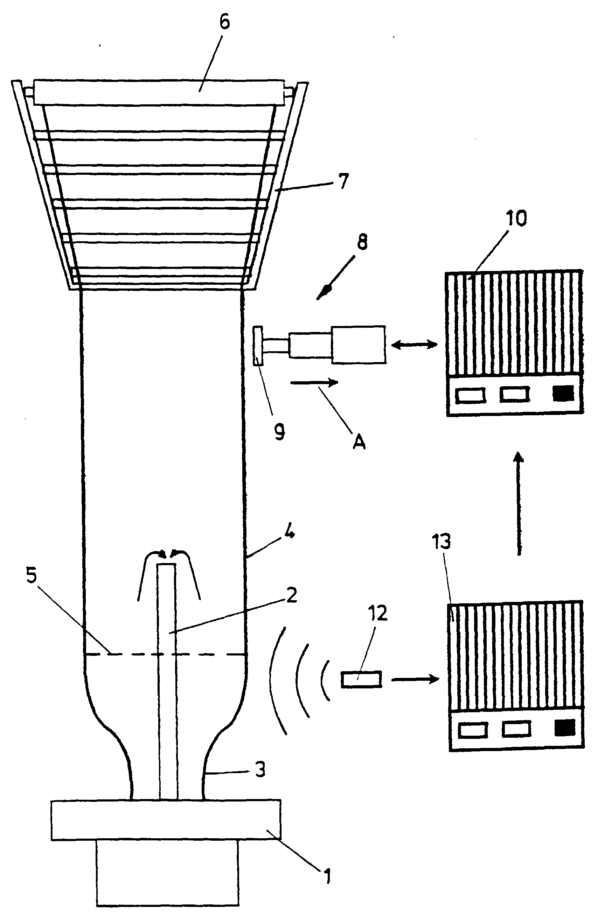

Ein Ausführungsbeispiel der Erfindung wird nachstehend anhand der Zeichnung, in deren einziger Figur eine Seitenansicht einer aus einem Blaskopf extrudierten und zu einer Folienblase aufgeblasenen Schlauchfolie mit Flachlegeeinrichtung schematisch dargestellt ist, näher erläutert.

Aus einem Folienblaskopf 1 üblicher Bauart mit vertikal ausgerichteter Mittellinie und nicht dargestellten Leitungen und inneren Kühlringen zur Zuführung der Innenkühlluft und einer Leitung 2 zum Abführen der Kühlluft wird ein schmelzflüssiger Kunststoffschlauch 3 extrudiert, der aufgrund des durch das Verhältnis von zu- und abgeführter Innenluft erzeugten Innendrucks zu einer Schlauchfolienblase 4 aufgeblasen wird. Die die Schlauchfolienblase 4 durchwandernde Schlauchfolie wird durch ein oberhalb des Blaskopfes 1 angeordnetes Abzugswalzenpaar 6 abgezogen, nachdem sie zuvor durch ein Flachlegeplattenpaar 7 flachgelegt worden ist, die sich keilförmig in Richtung auf den Einzugsspalt des Abzugsrollenpaares 6 hin verengen.

Im oberen Bereich der Schlauchfolienblase 4 ist dicht unterhalb der Flachlegeplatten 7 in einem Bereich, in der die Schlauchfolienblase 4 noch einen nahezu kreisförmigen Querschnitt aufweist, ein Sensor 8 angeordnet, der die Dicke oder andere Eigenschaften der Schlauchfolie abtastet. Bei dem Sensor 8 kann es sich auch beispielsweise um eine Dickenmeßeinrichtung handeln, die auf einen im Gestell angeordneten Karussell angeordnet ist, das die Schlauchfolienblase einfaßt und auf dem der Sensor 8 mit radialer Ausrichtung auf einer konzentrischen Kreisbahn berührungslos im dichten Abstand um die Schlauchfolienblase 4 herumfährt. Der auf einem Karussell oder gestellfest angeordnete Sensor 8 ist mit einem nicht dargestellten Antrieb versehen, der den Sensorkopf 9 in dem erforderlichen Abstand zu der Oberfläche der Schlauchfolienblase 4 hält. Die Signale des Sensors 8 werden einem Rechner 10 oder Steuergerät zugeführt, das die Sensorsignale verarbeitet und den radialen Abstand des Sensorkopfes 9 zu der Oberfläche der Schlauchfolienblase 4 einstellt.

Soweit ist die Blasfolienanlage mit dem die Schlauchfolienblase abtastenden Sensor bekannter Bauart, so daß auf eine nähere Beschreibung verzichtet werden kann.

Der aus dem Folienblaskopf 1 extrudierte und zu der Schlauchfolienblase 4 aufgeblasene Folienschlauch 3 erreicht bei der Frostlinie 5 aufgrund der erfolgten Abkühlung seine Festigkeit, so daß oberhalb der Frostlinie 5 mit Änderungen des Durchmessers der Schlauchfolienblase 4 nicht mehr zu rechnen ist.

Im Bereich der Frostlinie 5 und vorzugsweise unterhalb von dieser sind in dem Gestell Fühler 12 angeordnet, die radial auf die Schlauchfolienblase 4 gerichtet sind und deren Durchmesser erfassen. Vorzugsweise sind über den Umfang der Schlauchfolienblase 4 verteilt 3 Fühler 12 im Gestell angeordnet. Der oder die Fühler 12 weisen einen so großen radialen Abstand von der Schlauchfolienblase 4 auf, daß Berührungen zwischen dieser und den Fühlern 12 auch bei einer plötzlichen Durchmesservergrößerung ausgeschlossen sind.

Die den Durchmesser der Schlauchfolienblase 4 im Bereich der Frostlinie 5 erfassenden oder messenden Fühler 12, bei denen es sich beispielsweise um Ultraschall-Sensoren handeln kann, führen ihre Signale einem Rechner oder Steuergerät 13 zu. In dem Rechner oder Steuergerät 13 werden die Signale des oder der Fühler 12 verarbeitet. Der Rechner oder das Steuergerät 13 ist mit dem Rechner oder Steuergerät 10 verknüpft. Erfaßt ein Fühler 12 Durchmesserschwankungen und/oder plötzliche Durchmesservergrößerungen der Schlauchfolienblase 4, werden die entsprechenden Signale von dem Rechner oder der Steuereinheit 13 an den Rechner oder die Steuereinheit 10 weitergeleitet, der dann den Sensor 8 bzw. den Sensorkopf in Richtung des Pfeils A so schnell zurückfährt, daß sich der Sensor 8 außerhalb der Durchmesservergrößerung oder Ausbeulung der Schlauchfolienblase 4 befindet, bevor diese den Sensor 8 erreicht hat.

## Patentansprüche

1. Verfahren zum Verhindern einer Berührung zwischen einem zu einer Schlauchfolienblase (4) aufgeblasenen extrudierten Kunststoffschlauch (3) bei der Herstellung von Schlauchfolien und einem diese in ihrem oberen Bereich berührungslos abtastenden Sensor (8),
dadurch gekennzeichnet,
daß die Schlauchfolienblase (4) im Bereich der Frostlinie (5) berührungslos abgetastet und der Sensor (8) zurückgefahren wird, wenn die Abtastung eine plötzliche Durchmesservergrößerung oder Ausbauchung der Schlauchfolienblase ergibt.

2. Vorrichtung zur Durchführung des Verfahrens nach Anspruch 1 mit mindestens einem im oberen Bereich der Schlauchfolienblase ortsfest oder rotierend angeordneten Sensor, der die Dicke der Schlauchfolie oder andere Ei-genschaften von dieser mißt und der durch einen Antrieb in radialer Richtung verfahrbar ist, dadurch gekennzeichnet, daß im Bereich der Frostlinie (5) über den Umfang der Schlauchfolienblase (4) verteilt deren Durchmesser berührungslos abtastende Fühler angeordnet sind, die ihre Signale einer Steuereinrichtung (10, 13) zuführen, die den Sensor (8) über seinen Antrieb nach außen radial verfährt, wenn der Fühler (12) eine von einem Toleranzmaß abweichende Durchmesserzunahme oder Ausbauchung erfaßt.
